# EUROPÄISCHE PATENTSCHRIFT

(11) **EP 1 866 471 B1**
(45) Veröffentlichungstag und Bekanntmachung des Hinweises auf die Patenterteilung: **27.05.2009**
(21) Anmeldenummer: 06723598.6
(22) Anmeldetag: 21.03.2006
(51) Int. Cl.: D04H 3/03, D01F 6/76, C08G 12/32

(54) **VERFAHREN ZUR HERSTELLUNG VON DUROPLASTISCHEN FEINSTFASERVLIESEN MIT HOHER FLAMM-, THERMO- UND SCHALLSCHUTZWIRKUNG**
METHOD FOR PRODUCING DUROPLASTIC FINE-FIBER NON-WOVENS HAVING A HIGH FLAME-RETARDANT, THERMAL PROTECTIVE AND SOUND INSULATING EFFECT
PROCEDE DE PRODUCTION DE NON-TISSES THERMODURCISSABLES A FIBRES SUPERFINES CARACTERISES PAR UN EFFET PROTECTEUR ACCRU EN MATIERE D'IGNIFUGATION ET D'ISOLATION THERMIQUE ET ACOUSTIQUE

(30) Priorität: 21.03.2005 DE 102005013420
(43) Veröffentlichungstag der Anmeldung: 19.12.2007
(73) Patentinhaber: AMI - Agrolinz Melamine International GmbH, 4021 Linz (AT)
(72) Erfinder: RIEDEL, Bernd, 07333 Unterwellenborn (DE); BUCKA, Hartmut, A-4622 Eggendorf (AT)
(74) Vertreter: Gross, Felix
(86) Internationale Anmeldenummer: PCT/EP2006/002597
(87) Internationale Veröffentlichungsnummer: WO 2006/100041

(56) Entgegenhaltungen:
- EP-A- 1 403 405
- WO-A-99/32694
- WO-A-03/047721
- WO-A-03/106524
- US-A- 5 509 986

## Beschreibung

Gegenstand der Erfindung ist ein Verfahren zur Herstellung von duroplastischen Feinstfaservliesen.

Bei dem erfindungsgemäßen Verfahren wird von reaktiven, dreidimensional vernetzbaren, nichtlinearen Präpolymeren, vorzugsweise von verätherten Melamin-Formaldehyd-Harzen, ausgegangen. Die Schmelzen dieser Präpolymeren werden durch Düsen gepresst, die austretenden Schmelzen mittels heißer Luft zu Feinstfasern verblasen, die Feinstfasern vom Luftstrom getrennt und zu einem aus einem Feinstfasergeftecht._Das insbesondere unverfestigte Vlies wird anschließend verdichtet, mit einem eine dreidimensionale Vernetzung auslösenden Medium behandelt und anschließend thermisch nachgehärtet, wobei es zu einer Eigenverklebung und/oder Aushärtung der Vliesfasern kommt. Es entstehen Vlieskörper, welche aufgrund ihrer hohen Flammschutzwirkung sowie ihrer guten Thermoschutz-, Schallschutz- und Filterfähigkeit vielfältig Verwendung finden.

Dabei ist es besonders vorteilhaft, wenn ein unverfestigtes Vlies, das auch als Wirrlage (lose zusammenliegende Fasern) bezeichnet wird, abgeschieden wird.

Feinstfaservliese, die sich hervorragend für die Filtration sowie den Thermo- und Schallschutz eignen, werden in großen Mengen aus schmelzbaren Polymeren nach dem bekannten Meltblown-Verfahren hergestellt. Beim Meltblown-Verfahren wird ein niedrig viskoser Schmelzestrahl eines thermoplastischen Polymeren in einen heißen Luftstrom hoher Geschwindigkeit extrudiert. Dabei wird die Schmelze zu Feinstfasern zerstreut, abgekühlt und auf einem Siebband abgelegt. Nachteilig ist, dass dieses kostengünstige Verfahren nur auf thermoplastische Polymere beschränkt ist, welche jedoch eine ungenügende Flammschutzwirkung aufweisen. Die flammfesten, duroplastischen Polymere konnten bislang nicht nach solchen Verfahren zu Fasern verarbeitet werden.

Es ist seit langem bekannt, mit duroplastischem Phenolharz verfestigte Baumwollvliese als Schall- und Thermoschutz im Automobilsektor einzusetzen (Becker/Braun, Kunststoff-Handbuch: Duroplaste, Seite 763, Hanser Verlag München). Der Nachteil dieser Vliese ist ihre hohe Flächenmasse und ihre ungenügende Flammbeständigkeit.

Weiter bekannt sind duroplastische Melaminharz enthaltende Fasern sowie daraus hergestellte Vliese, die eine sehr gute Flammschutzwirkung aufweisen. So beschreiben die DE 19515277, die DE 10133787 oder die DE 19753834 die Herstellung von Fasern aus wässrigen Melamin - Phenol - Formaldehyd Vorkondensaten. Dabei wird die wässrige Vorkondensatlösung durch Spinndüsen gepresst, die entstehenden Fasern anschließend getrocknet und bei erhöhter Temperatur ausgehärtet. Die Fasern können anschließend nach bekannten Verfahren zu nicht brennbaren Vliesen verarbeitet werden. Ein wesentlicher Nachteil solcher Vliese ist, dass sich die Fasern bei der Vliesbildung nur ungenügend miteinander verflechten und damit die Festigkeit der Vliese nicht ausreichend ist. Oft ist der Zusatz von vliesbildenden Hilfsfasern wie Baumwolle erforderlich.

Ein weiterer Nachteil besteht in der Trennung der Verfahrensstufen "Faserherstellung" und "Vliesbildung", wodurch das Vliesherstellungsverfahren unerwünscht kompliziert ist. Nachteilig ist weiterhin, dass bei der Herstellung des Fasermaterials bislang nur wässrige Melaminharz-Vorkondensat-Lösungen eingesetzt werden, was ein energetisch aufwendiges Verdampfen des Wassers während des Fadenbildungsprozesses erforderlich macht.

Die EP 1 403 405 A2 beschreibt Endlosfäden, die durch Schmelzen von Oligo- und/oder Polytriazinether enthaltenden Aminoplast-Polymeren herstellbar sind. Die Aminoplast-schmelzen werden hier mittels Düsen versponnen und anschließend unter Härtung bis zum gewünschten Durchmesser zu endlosen Filamenten verzogen. Die gehärteten Aminoplastfäden können aufgespult, zu einem Strang gebündelt oder zu einem Flächengebilde abgelegt werden. Nachteilig dabei ist wiederum das komplizierte Vliesherstellverfahren, bei dem zuerst die Endlosfäden gebildet, diese anschließend zu Fasern geschnitten und schließlich zum Flächengebilde verfestigt werden müssen.

Es stellte sich demnach die Aufgabe, ein Verfahren zu entwickeln, mit dem duroplastische Feinstfaservliese kostengünstig hergestellt werden können, die sowohl eine hohe Flammschutzwirkung als auch eine hohe Thermoschutz-, Schallschutz- und Filterfähigkeit besitzen.

Die Aufgabe wird dadurch gelöst, dass Schmelzen von reaktiven, dreidimensional vernetzbaren, nichtlinearen Präpolymeren durch Düsen gepresst, die austretenden Schmelzen mittels heißer Luft zu Feinstfasern verblasen, die Feinstfasern vom Luftstrom getrennt und zu einem aus einem Feinstfasergeflecht bestehenden Vlies abgeschieden werden. Das Vlies wird anschließend verdichtet, mit einem eine dreidimensionale Vernetzung auslösenden Medium behandelt und in einer anschließenden thermischen Nachhärtung die Feinstfasern eigenverklebt und/oder ausgehärtet werden.

Dabei ist es besonders vorteilhaft, wenn die Feinstfasern vom Luftstrom getrennt werden und als unverfestigtes Vlies, einer so genannten Wirrlage, abgeschieden werden.

Überraschend dabeiist, dass, obwohl die reaktiven, drei-dimensional vernetzbaren, nichtlinearen Präpolymeren im festen Zustand eine hohe Sprödigkeit aufweisen und ohne besonderen Kraftaufwand leicht zerrieben werden können, bei dem erfindungsgemäßen Verfahren sich aus den Schmelzen dieser Präpolymeren nach dem Verlassen der Düse, trotz der starken Turbulenzen und Reibungskräfte in der Blasluft bzw. im Faser/Luftstrom, Feinstfasern bilden bzw. diese ohne zu Feinstpartikel zerrieben zu werden, insbesondere zu einem unverfestigten Vlies, welches unter Krafteinwirkung verdichtet bzw. verformt werden kann, ablegen lassen.

Überraschend ist auch, dass die gebildeten Feinstfasern eine ungeordnete jedoch für die Vliesbildung und den Vlieszusammenhalt vorteilhafte kleinteilige Kräuselstruktur aufweisen.

Überraschend ist weiterhin, dass die gebildeten Feinstfasern auch in Form von Endlosfilamenten vorliegen können.

Überraschend ist auch, dass die Feinstfasern, nach Einwirkung des die dreidimensionale Vernetzung auslösenden Mediums, an ihren Berührungsflächen im Vlies miteinander eigenverkleben können, ohne dass zusätzliche Bindemittel zugesetzt wurden.

Für die Durchführung des Verfahrens ist es von Vorteil, wenn die reaktiven vernetzbaren, nichtlinearen Präpolymeren aus mit Alkoholen verätherten Melamin-Formaldehyd-Harze aus schmelzbaren 4- bis 18-Kern-Oligotriazinethem bestehen, wobei in den Oligotriazinethern die Triazinsegmente 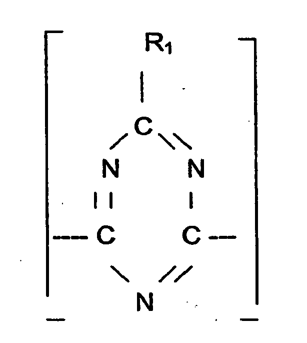
R₁ = -NH₂, -NH-CHR₂-O-R₃ ,-NH-CHR₂-O-R₄-OH, -CH₃, -C₃H₇, -C₆H₅, -OH, Phthalimido-. Succinimido-, -NH-CO-_{C5-C18}-Alkyl, -NH-C₅-C₁₈-Alkylen-OH 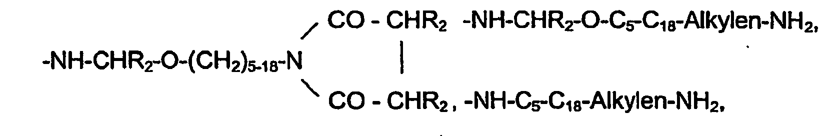 -NH-CHR₂-O-R₄-O-CHR₂-NH-, -NH-CHR₂-NH-, -NH-CHR₂-O-C₂-C₁₈-Alkylen-NH-, -NH-C₅-C₁₈-Alkylen-NH-, -NH-CHR₂-O-CHR₂-NH-,
R₂ = H, C₁-C₇ - Alkyl;
R₃ = C₁-C₁₈ - Alkyl, H;
R₄ = C₂-C₁₈-Alkylen, -[CH₂-CH₂-O-CH₂-CH₂]ₙ-, -[CH₂-CH(CH₃)-O-CH₂-CH(CH₃)]ₙ-, -[-O-CH₂-CH₂-CH₂-CH₂-]ₙ- -[(CH2)₂₋₈-O-CO-_{C6-C12-}Aryl-CO-O-(CH₂)₂₋₈-]ₙ-, -[(CH2)₂₋₈-O-CO-_{C6-C12-}Alkylen-CO-O-(CH₂)₂₋₈-]ₙ-,
   wobei n = 1 bis 200,
Siloxangruppen enthaltende Sequenzen des Typs C₁-C₄-Alkyl C₁-C₄-Alkyl, -(C₁-C₁₈)-Alkyl-O-Si-O-[Si-]₁₋₄-O-(C₁-C₁₈)-Alkyl-, C₁-C₄-Alkyl, C₁-C₄-Alkyl
Siloxangruppen enthaltende Polyestersequenzen des Typs -[(A)ᵣ-O-CO-(B)ₛ-CO-O-(A)ᵣ]-, bei denen
A = {(CH₂)₂₋₈-O-CO-(C₆-C₁₄)-Arylen-CO-O-(CH₂)₂₋₈-} oder -{(CH₂)₂₋₈-O-CO-(C₂-C₁₂)-Arylen-CO-O-(CH₂)₂₋₈-}; C₁-C₄-Alkyl C₁-C₄-Alkyl
B= -{(C₆-C₁₄)-Arylen-CO-O-({Si-O-[Si-O]_{y}-CO-(C₆-C₁₄)-Arylen-} C₁-C₄-Alkyl C₁-C₄-Alkyl oder C₁-C₄-Alkyl C₁-C₄-Alkyl |{O-CO-(C₂-C₁₂)-Alkylen-CO-O-({Si-O-[Si-O]_{z}-CO-(C₂-C₁₂)-Alkylen-CO-}; C₁-C₄-Alkyl C₁-C₄-Alkyl r = 1 bis 70; s = 1 bis 70 und y = 3 bis 50 bedeuten;
Siloxangruppen enthaltende Polyethersequenzen des Typs C₁-C₄-Alkyl C₁-C₄-Alkyl -CH₂-CHR₂-O-({Si-O-[Si-O]_{y}-CHR₂-CH₂-C₁-C₄-Alkyl C₁-C₄-Alkyl
wobei R₂ = H; C₁-C₄-Alkyl und y = 3 bis 50 bedeuten;
Sequenzen auf Basis von Alkylenoxidaddukten des Melamins vom Typ 2-Amino-4,6-di-_{C2-C4-}alkylenamino-1,3,5-triazin - Sequenzen
Phenolethersequenzen auf Basis zweiwertiger Phenole und C₂-C₈-Diolen vom Typ -C₂₋C₈₋Alkylen-O-(C₆-C₁₈)-Arylen-O-(C₂-C₈)-Alkylen-Sequenzen
durch Brückenglieder -NH-CHR₂-O-R₄-O-CHR₂-NH- und -NH-CHR₂-NH- sowie gegebenenfalls -NH-CHR₂-O-CHR₂-NH-, -NH-CHR₂-O-C₅-C₁₈-Alkylen-NH- bzw. - NH-C₅-C₁₈-Alkylen-NH- zu 4- bis 18-Kern-Oligotriazinethern mit linearer und/oder verzweigter Struktur verknüpft sind,
wobei die endständigen Trinzinsegmente in den Oligotriazinethem Triazinsegmente der Struktur 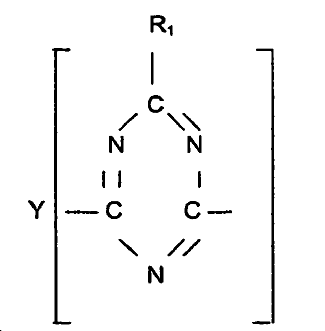
Y= -NH-CHR₂O-R₃ ,-NH-CHR₂-O-R₄-OH sowie gegebenenfalls -NH-CHR₂O-C₅-C₁₈-Alkylen-NH₂, -NH-C₅-C₁₈-Alkylen-NH₂, -NH-C₅-C₁₈-Alkylen-OH,
R₁ = -NH₂, -NH-CHR₂-O-R₃ ,-NH-CHR₂-O-R₄-OH, -CH₃, -C₃H₇, -C₆H₅, -OH, Phthalimido-. Succinimido-, -NH-CO-R₃, -NH-C₅-C₁₈-Alkylen-OH, -NH-C₅-C₁₈-Alkylen-NH₂, 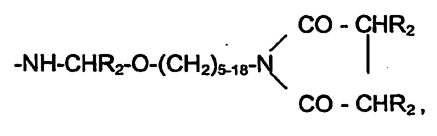 -NH-CHR₂-O-C₅-C₁₈-Alkylen-NH₂,
R₂ = H, C₁-C₇ - Alkyl;
R₃ = C₁-C₁₈ - Alkyl, H;
R₄ = C₂-C₁₈-Alkylen, -[CH₂CH₂-O-CH₂-CH₂]ₙ-, -[CH₂-CH(CH₃)-O-CH₂-CH(CH₃)]ₙ-, -[-O-CH₂-CH₂-CH₂-CH₂-]ₙ-, -[(CH₂)₂₋₈-O-CO-_{C6-C12-}Aryl-CO-O-(CH₂)₂₋₈-]ₙ -, -[(CH₂)₂₋₈-O-CO-_{C6-C12-}Alkylen-CO-O-(CH₂)₂₋₈-]ₙ-,
   wobei n = 1 bis 200,
Siloxangruppen enthaltende Sequenzen des Typs C₁-C₄-Alkyl C₁-C₄-Alkyl, -(C₁-C₁₈)-Nkyl - O - Si -O-[Si-]₁₋₄- O -(C₁-C₁₈)-Alkyl -, C₁-C₄-Alkyl, C₁-C₄-Alkyl
Siloxangruppen enthaltende Polyestersequenzen des Typs -[(A)ᵣ-O-CO-(B)ₛ-CO-O-(A)ᵣ]- , bei denen
A = {(CH₂)₂₋₈-O-CO-(C₆-C₁₄)-Arylen-CO-O-(CH₂)₂₋₈-} oder -{(CH₂)₂₋₈-O-CO-(C₂-C₁₂)-Alkylen-CO-O-(CH₂)₂₋₈-}; C₁-C₄-Alkyl C₁-C₄-Alkyl
B = -{(C₆-C₁₄)-Arylen-CO-O-({Si -O-[Si-O]_{y}-CO-(C₆- C₁₄)-Arylen-} C₁-C₄-Alkyl C₁-C₄-Alkyl oder C₁-C₄-Alkyl C₁-C₄-Alkyl {O-CO-(C₂-C₁₂)-Alkylen-CO-O-({Si-O-[Si-O]_{z}-CO-(C₂-C₁₂)-Akylen-CO-}; C₁-C₄-Alkyl C₁-C₄-Alkyl r = 1 bis 70; s = 1 bis 70 und y = 3 bis 50 bedeuten;
Siloxangruppen enthaltende Polyethersequenzen des Typs C₁-C₄-Alkyl C₁-C₄-Alkyl -CH₂-CHR₂-O-({Si-O-[Si-O]_{y}-CHR₂-CH₂-C₁-C₄-Alkyl C₁-C₄-Alkyl
wobei R₂ = H; C₁-C₄-Alkyl und y = 3 bis 50 bedeuten;
Sequenzen auf Basis von Alkylenoxidaddukten des Melamins vom Typ 2-Amino-4,6-di-_{C2-C4-}alkylenamino-1,3,5-triazin - Sequenzen
Phenolethersequenzen auf Basis zweiwertiger Phenole und C₂-C₈-Diolen vom Typ -C₂₋C₈₋Alkylen-O-(C₆-C₁₈)-Arylen-O-(C₂C₈)-Alkylen-Sequenzen bilden,
in den Oligotriazinethern das Molverhältnis der Substituenten R₃ : R₄ = 20 : 1 bis 1 : 20 beträgt,
der Anteil der Verknüpfungen der Triazinsegmente durch Brückenglieder - NH-CHR₃-O-R₄-O-CHR₃-NH- 5 bis 95 Mol% beträgt, enthalten.

Unter Triazinen werden in diesem Dokument aromatische Stickstoff-Heterozyklen der Summenformel C₃H₃N₃ mit drei Stickstoffatomen im 6-Ring verstanden. Unter Triazinsegmenten werden hier von den Triazinen abgeleitete Teile eines hier beschriebenden Netzwerkes verstanden.

Die mit Alkoholen verätherten Melamin-Formaldehyd-Harze können neben Melamin und Formaldehyd weitere die Reaktivität der Präpolymeren und die molekulare Struktur der ausgehärteten Polymeren beeinflussende Verbindungen sowie bis zu 20 Masse% weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane und/oder bis zu 20 Masse-% aliphatische Diole vom Typ HO-R-OH sowie bis zu 2 Masse-% Füllstoffe, Farbpigmente, Stabilisatoren, UV-Absorber und/oder Hilfsstoffe enthalten.

Vor ihrer Verarbeitung als Schmelze liegen die reaktiven, dreidimensional vernetzbaren, nichtlinearen Präpolymeren in Form von zylindrischen, linsenförmigen, pastillenförmigen oder kugelförmigen Partikeln mit einem mittleren Durchmesser von 0,5 bis 8 mm vor.

Für ihre Verspinnung werden die reaktiven, dreidimensional vernetzbaren, nichtlinearen Präpolymeren zwischen 70 und 160 °C, insbesondere zwischen 70 °C und 130°C aufgeschmolzen.

Der Durchmesser der Düsen, beträgt 0,1 bis 3mm, vorzugsweise 0,5 bis 1 mm.

Vorzugsweise befinden sich die Düsen in oder auf den Spitzen von Kegeln und die heiße Luft strömt mit hoher Geschwindigkeit an ihnen entlang. Dadurch ist es möglich, die Temperatur der Blasluft, welche die Schmelzen zu Feinstfasern zerstreut, weit über die Härtungstemperatur des reaktiven, dreidimensional vernetzbaren, nichtlinearen Präpolymeren zu erhöhen, wodurch besonders feintitrige Fasern zugänglich werden, ohne dass es zu einem Zuwachsen der Düsen kommt.

Vorteilhaft ist weiter, wenn die Kegel einen Winkel von 10 bis 90° aufweisen.

Bevorzugt ist es, wenn die heiße Luft eine Temperatur von 100 bis 400°C vorzugsweise von 180 bis 300°C besitzt.

Die zum Vlies abgelegten Feinstfasern können Filamente sein oder ein Durchmesser/Längenverhältnis von größer 1 zu 50 aufweisen. Sie besitzen einen mittleren Durchmesser von 0,5 bis 100µm, bevorzugt von 1 bis 7µm.

Die Trennung der Feinstfasern vom Luftstrom erfolgt mittels einem in dem Luft-/Feinstfaserstrom eingeschobenen Drahtgitter oder Drahtgeflecht, welches vorteilhaft als Endlosband vorliegt. Dabei bildet sich gleichzeitig das als Wirrlage abgeschiedene unverfestigte Vlies aus.

Vorteilhafterweise wird die Luft des Luft-/Feinstfaserstroms unterhalb des Drahtgitters /Drahtgeflechtes abgesaugt, wodurch das sich bildende sehr lockerliegende Feinstfaservlies bereits eine erste Verdichtung erfährt.

Durch mechanischen Druck oder durch Formgebung kann das unverfestigte Vlies weiter auf ein gewünschtes Maß verdichtet werden.

Die dreidimensionale Vernetzung erfolgt durch eine Kondensationsreaktion. Die Kondensationsreaktion wird durch beispielsweise gasförmiges HCl und/oder gasförmiges HBr und/oder gasförmige Ameisensäure unverdünnt oder verdünnt mit Luft oder einem anderen inerten Gas beschleunigt (katalysiert).

Durch die Sorption der katalytisch wirkenden Komponenten kann die dreidimensionale Vernetzung vorteilhafterweise bei Temperaturen unterhalb des Feinstfaserschmelzpunktes ausgelöst werden.

Die thermische Nachhärtung, bei der die Feinstfasern im Vlies eigenverkleben und/oder aushärten, erfolgt bevorzugt bei Temperaturen von 60 bis 320°C, besonders bevorzugt bei 250 bis 280°C. Vorteilhaft ist es dabei, wenn die Temperatur langsam von 60 auf 280°C, vorzugsweise von 80 auf 280°C erhöht wird.

### Beispiel 1

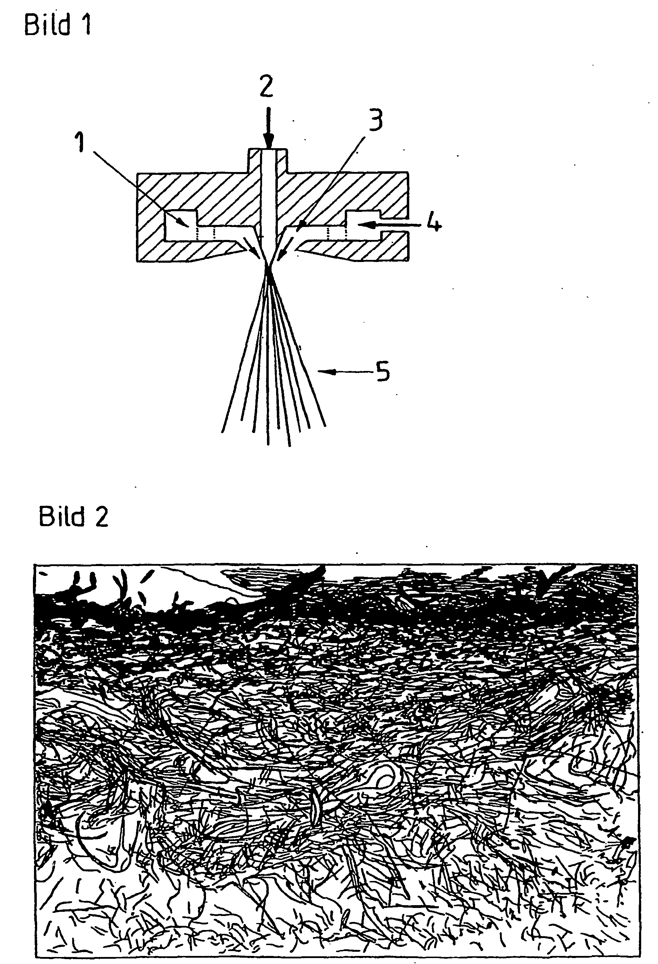

Ein durch Umsetzung von Melamin mit Formaldehyd und anschließender Veretherung mit Methanol und Poytetrahydrofuran Mn 250 hergestelltes Präpolymer mit einer Viskosität von 53 Pa·s bei 135 °C wird in einem Extruder der Firma Rand Castel bei einer Blocktemperatur von 135 °C aufgeschmolzen und die Schmelze durch eine auf 150 °C erwärmte Düse mit einem Lochdurchmesser von 1 mm gedrückt. Die Düse befindet in der Spitze eine Kegels, der einen Winkel von 20°C aufweist. Die aus der Düse austretende Präpolymerschmelze wird von an dem Düsenkegel entlangströmender heißer Luft (190°C, 0,4 bar) zu Feinstfasern verblasen. Der Aufbau der verwendeten Düse ist in Bild 1 dargestellt.
Der Blasfaserstrom wird auf ein Drahtsieb gelenkt, unter dem sich eine Absaugung befindet. Die auf dem Drahtsieb abgelegten Feinstfasern bilden ein lockeres Wirrvlies (unverfestigtes Vlies), welches mit einer Walze verdichtet wird. Zur Auslösung der Härtungsreaktion (insbesondere einer Katalysierung) wird durch das Vlies ein Gemisch von 25% HCl und 75% Luft gesaugt. Die Aushärtung des Vlieses erfolgt durch Einwirkung von heißer Luft (Erhöhung der Temperatur). Die Temperatur wird dabei in einem Zeitraum von 30 Minuten von 60 auf 210° C erhöht.

Die das Vlies bildenden ausgehärteten Feinstfasern haben eine Länge von 1 bis 50mm und einen Durchmesser von 4 bis 20µm.

Das erhaltene Vlies hat eine Flächenmasse 34g/m² bei einer Dicke 2 mm von. Die Struktur des Vlieses ist in der REM Aufnahme Bild 2 belegt.

In einer Abwandlung dieser Ausführungsform wird die Temperatur für einen Zeitraum von 30 Minuten von 60 auf 280°C erhöht. Das Vlies verweilt bei 280°C weitere 45 Minuten.

### Beispiel 2

Ein durch Umsetzung von Melamin mit Formaldehyd und anschließender Veretherung mit Methanol und Butandiol hergestelltes Präpolymer mit einer Viskosität von 15 Pa·s bei 135 °C wird in einem Extruder der Firma Rand Castel bei einer Blocktemperatur von 145 °C aufgeschmolzen und die Schmelze durch eine auf 150 °C erwärmte Düse mit einem Lochdurchmesser von 1 mm gedrückt. Die Düse befindet auf oder in der Spitze eine Kegels, der einen Winkel von 20°C aufweist. Die aus der Düse austretende Präpolymerschmelze wird von an dem Düsenkegel entlangströmender heißer Luft (280°C, 0,8 bar) zu Feinstfasern verblasen. Der Aufbau der verwendeten Düse ist in Bild 1 dargestellt.

Der Blasfaserstrom wird auf ein laufendes endlos Drahtsieb gelenkt, unter dem sich eine Absaugung befindet. Die auf dem Drahtsieb abgelegten Feinstfasern bilden ein stabiles unverfestigtes Vlies, welches mit einer Walze verdichtet wird. Zur Auslösung, insbesondere zur Beschleunigung der Härtungsreaktion wird durch das unverfestigte Vlies ein Gemisch von 75% HCl und 25% Luft gesaugt.

Durch die Erhöhung der Temperatur wird die Kondensationsreaktion gestartet. Durch das bei der Kondensationsreaktion freiwerdende Methanol werden die Feinstfasern klebrig. Sie verkleben an den Kreuzungspunkten.

Es entsteht ein durch Verkleben verfestigtes Feinstfaservlies. Die Temperatur wird in einem Zeitraum von 30 Minuten weiter von 80° auf 200°C erhöht.

In einer alternativen Ausführungsform wird in einem Zeitraum von 30 Minuten weiter von 100°C auf 250°C

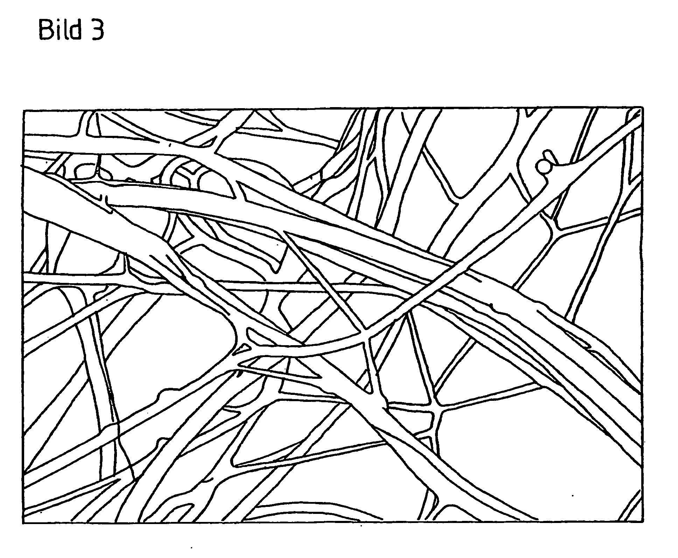

Die das erhaltende, insbesondere verfestigte Vlies bildenden ausgehärteten Feinstfasern haben eine Länge von 1 bis 50mm und einen Durchmesser von 1 bis 7µm. Sie sind wie in REM-Aufnahme Bild 3 dargestellt an ihren Kreuzungspunkten eigenverklebt.

Das erhaltene Vlies hat eine Raumdichte von 9kg/m³

### Beispiel 3

Ein durch Umsetzung von Melamin mit Formaldehyd und anschließender Veretherung mit Methanol und Butandiol hergestelltes Präpolymer mit einer Viskosität von 20 Pa·s bei 130 °C wird in einem Extruder der Firma Rand Castel bei einer Blocktemperatur von 135°C aufgeschmolzen und die Schmelze durch eine auf 150 °C erwärmte Düse mit einem Lochdurchmesser von 0,5 mm gedrückt. Die Düse befindet in der Spitze eine Kegels, der einen Winkel von 20°C aufweist. Die aus der Düse austretende Präpolymerschmelze wird von an dem Düsenkegel entlangströmender heißer Luft (280°C, 0,8 bar) zu Feinstfasern verblasen.

Der Blasfaserstrom wird auf ein laufendes endlos Drahtsieb gelenkt, unter dem sich eine Absaugung befindet. Die auf dem Drahtsieb abgelegten Feinstfasern bilden ein stabiles unverfestigtes Vlies, welches mit einer Walze verdichtet wird. Zur Beschleunigung der Härtungsreaktion wird durch das Vlies ein Gemisch von 0.2% HCl und 99.8% Luft gesaugt.
Anschließend wird weitere trockene Luft solange durchgesaugt bis keine HCl mehr nachweisbar ist (Die Bestimmung erfolgt mit feuchtem Indikatorpapier).
Durch Durchströmen des unverfestigten Vlieses mit heißer Luft wird die Temperatur des Vlieses erhöht. Im Temperaturbereich unter dem Schmelzpunkt des Präpolymeren wird das Präpolymere wegen des bei der Kondensationsreaktion abgeschiedenen Methanols klebrig und verklebt an den Kreuzungspunkten.
Durch weiteres Durchströmem des Vlieses mit heißer Luft kommt es zur weiteren Erhöhung der Temperatur. Die Temperatur wird dabei in einem Zeitraum von 30 Minuten von 80 auf 280°C erhöht. Das bei der Härtung durch die Kondensation freiwerdende Methanol wird zusammen mit Rest-HCI ausgetragen.
Die das Vlies bildenden ausgehärteten Feinstfasern haben eine Länge von 1 bis 50mm und einen Durchmesser von 1 bis 7µm.
Das erhaltene Vlies besitzt einen mit Differential Thermogravimetrie bestimmten Zersetzungspunkt von 390°C.
Das erhaltene Vlies hat eine Raumdichte von 9kg/m³.
Das Vlies wird gegebenenfalls anschließend in einer weiteren Prozessstufe mit Wasser gewaschen (Temperatur des Waschwassers: 30°C). Der mit Differential Thermogravimetrie bestimmte Zersetzungspunkt des Vlieses erhöht sich dadurch auf 400°C.

### Bezugszeichenliste Bild 1

- 1: Ringkanal
- 2: MER-Schmelze
- 3: Blasluft
- 4: Druckluft
- 5: Blasfaserstrom

## Patentansprüche

1. Verfahren zur Herstellung von duroplastischen Feinstfaservliesen, **dadurch gekennzeichnet, dass**
a) Schmelzen von reaktiven, dreidimensional vernetzbaren, nichtlinearen Präpolymeren durch Düsen, gepresst,
b) die austretenden Schmelzen mittels heißer Luft zu Feinstfasern verblasen,
c) die Feinstfasern vom Luftstrom getrennt und zu einem aus einem Feinstfasergeflecht bestehenden Vlies abgeschieden werden,
d) das Vlies anschließend verdichtet,
e) mit einem eine dreidimensionale Vernetzung auslösenden Medium behandelt und in einer anschließenden thermischen Nachhärtung die Feinstfasern im Vlies eigenverklebt und/oder ausgehärtet werden.

2. Verfahren nach Anspruch 1, **dadurch gekennzeichnet, dass** reaktive, durch eine Kondensationsreaktion dreidimensional vernetzbare, nichtlineare Präpolymere durch Düsen, die sich in der Spitze von Kegeln befinden, gepresst werden.

3. Verfahren nach Anspruch 2, **dadurch gekennzeichnet, dass** die austretende Schmelze durch die mit hoher Geschwindigkeit an den Spitzen der Düsenkegel entlang strömende heiße Luft, deren Temperatur über der Starttemperatur der Kondensationsreaktion liegt, direkt am Düsenausgang zu Feinstfasern verblasen wird.

4. Verfahren nach Anspruch 2 oder 3, **dadurch gekennzeichnet, dass** die Feinstfasern vom Luftstrom getrennt und als unverfestigtes Vlies (Wirrlage) abgeschieden werden.

5. Verfahren nach Anspruch 4, **dadurch gekennzeichnet, dass** das unverfestigte Vlies anschließend verdichtet wird.

6. Verfahren nach mindestens einem der Ansprüche 4 oder 5, **dadurch gekennzeichnet, dass** das unverfestigtes Vlies von Luft, die eine die Vernetzung katalysierende Komponente enthält, bei Temperaturen unterhalb des Schmelzpunktes des Präpolymeren durchströmt wird.

7. Verfahren nach mindestens einem der Ansprüche 4 bis 6, **dadurch gekennzeichnet, dass** das unverfestigte Vlies anschließend von einem inerten Medium durchströmt wird und dabei die katalysierende Komponente aus den Räumen zwischen den Fasern vollständig entfernt oder gegebenenfalls mit einem basischen Gas neutralisiert wird.

8. Verfahren nach mindestens einem der Ansprüche 4 bis 7, **dadurch gekennzeichnet, dass** durch Erhöhung der Temperatur das unverfestigte Vlies zu einem verfestigten Vlies eigenverklebt und/oder ausgehärtet wird.

9. Verfahren nach Anspruch 8, **dadurch gekennzeichnet, dass** das Vlies mit heißer Luft durchströmt und dabei stufenweise oder kontinuierlich weiter erwärmt wird.

10. Verfahren nach Anspruch 8 oder 9, **dadurch gekennzeichnet, dass** Vlies bei hohen Temperaturen verweilt.

11. Verfahren nach mindestens einem der vorhergehenden Ansprüche, **dadurch gekennzeichnet, dass** die reaktiven vernetzbaren, nichtlinearen, Präpolymeren aus mit Alkoholen verätherten Melamin-Formaldehyd-Harzen bestehen

12. Verfahren nach Anspruch 11 **dadurch gekennzeichnet, dass** die mit Alkoholen verätherten Melamin-Formaldehyd-Harze aus schmelzbaren 4- bis 18-Kern-Oligotriazinethem bestehen, wobei in den Oligotriazinethem die Triazinsegmente 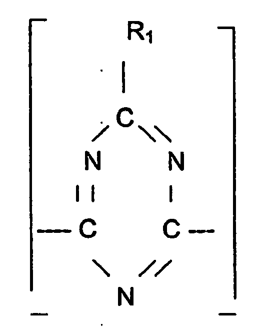
R₁ = -NH₂, -NH-CHR₂-O-R₃ ,-NH-CHR₂-O-R₄-OH, -CH₃,-C₃H₇,-C₆H₅,-OH, Phthalimido-. Succinimido-, -NH-CO-_{C5-C18}-Alkyl, -NH-C₅-C₁₈-Alkylen-OH 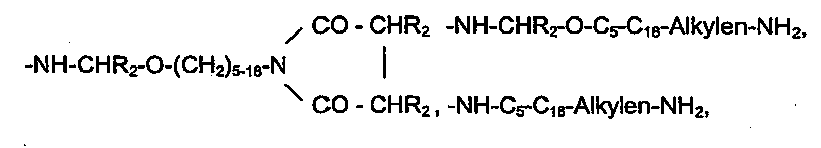 -NH-CHR₂-O-R₄-O-CHR₂-NH-, -NH-CHR₂-NH-, -NH-CHR₂-O-C₅-C₁₈-Alkylen-NH-, -NH-C₅-C₁₈-Alkylen-NH-, -NH-CHR₂-O-CHR₂-NH-,
R₂ = H, C₁-C₇ - Alkyl;
R₃ = C₁-C₁₈ - Alkyl, H;
R₄ = C₂-C₁₈-Alkylen, -[CH₂-CH₂-O-CH₂-CH₂]ₙ -, -[CH₂-CH(CH₃)-O-CH₂-CH(CH₃)]ₙ -, -[-O-CH₂-CH₂-CH₂-CH₂-]ₙ--[(CH₂)₂₋₈-O-CO-_{C6-C12-}Aryl-CO-O-(CH₂)₂₋₈-]ₙ -, -[(CH₂)₂₋₈-O-CO-_{C6-C12-}Alkylen-CO-O-(CH₂)₂₋₈-]ₙ -,
wobei n = 1 bis 200,
Siloxangruppen enthaltende Sequenzen des Typs C₁-C₄-Alkyl C₁-C₄-Alkyl, -(C₁-C₁₈)-Alkyl - O - Si -O-[Si-]₁₋₄- O -(C₁-C₁₈)-Alkyl -, C₁-C₄-Alkyl, C₁-C₄-Alkyl
Siloxangruppen enthaltende Polyestersequenzen des Typs -[(A)ᵣO-CO-(B)ₛ-CO-O-(A)ᵣ]-, bei denen
A = {(CH₂)₂₋₈-O-CO-(C₆-C₁₄)-Arylen-CO-O-(CH₂)₂₋₈-} oder -{(CH₂)₂₋₈-O-CO-(C₂-C₁₂)-Alkylen-CO-O-(CH₂)₂₋₈-}; C₁-C₄-Alkyl C₁-C₄-Alkyl
B = -{(C₆-C₁₄)-Arylen-CO-O-({Si-O-[Si-O]_{y}-CO-(C₆- C₁₄)-Arylen-} C₁-C₄-Alkyl C₁-C₄-Alkyl oder C₁-C₄-Alkyl C₁-C₄-Alkyl |{O-CO-(C₂-C₁₂)-Alkylen-CO-O-({Si-O-[Si-O]_{z}-CO-(C₂-C₁₂)-Alkylen-CO-}; C₁-C₄-Alkyl C₁-C₄-Alkyl r = 1 bis 70; s = 1 bis 70 und y = 3 bis 50 bedeuten;
Siloxangruppen enthaltende Polyethersequenzen des Typs C₁-C₄-Alkyl C₁-C₄-Alkyl -CH₂-CHR₂-O-({Si -O-[Si-O]_{y}-CHR₂-CH₂-C₁-C₄-Alkyl C₁-C₄-Alkyl
wobei R₂ = H; C₁-C₄-Alkyl und y = 3 bis 50 bedeuten; Sequenzen auf Basis von Alkylenoxidaddukten des Melamins vom Typ 2-Amino-4,6-di-_{C2}-_{C4-}alkylenamino-1,3,5-triazin - Sequenzen Phenolethersequenzen auf Basis zweiwertiger Phenole und C₂-C₈-Diolen vom Typ -C₂₋C₈-Alkylen-O-(C₆-C₁₈)-Arylen-O-(C₂-C₈)-Atkylen-Sequenzen
durch Brückenglieder -NH-CHR₂-O-R₄-O-CHR₂-NH- und -NH-CHR₂-NH- sowie gegebe-nenfalls -NH-CHR₂-O-CHR₂-NH-, -NH-CHR₂-O-C₅-C₁₈-Alkylen-NH- bzw. - NH-C₅-C₁₈-Alkylen-NH- zu 4- bis 18-Kern-Oligotriazinethern mit linearer und/oder verzweigter Struktur verknüpft sind,
wobei die endständigen Trinzinsegmente in den Oligotriazinethem Triazinsegmente der Struktur 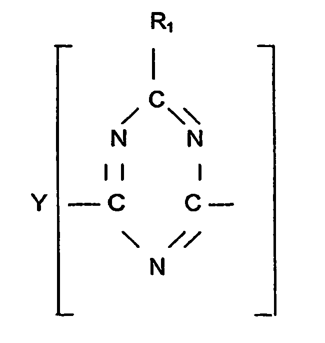
Y= -NH-CHR₂O-R₃ ,-NH-CHR₂-O-R₄-OH sowie gegebenenfalls -NH-CHR₂-O-C₅-C₁₈-Alkylen-NH₂, -NH-C₅-C₁₈-Alkylen-NH₂, -NH-C₅-C₁₈-Alkylen-OH,
R₁ = -NH₂, -NH-CHR₂-O-R₃ ,-NH-CHR₂-O-R₄-OH, -CH₃, -C₃H₇, -C₆H₅, -OH, Phthalimido-. Succinimido-, -NH-CO-R₃, -NH-C₅C₁₈-Alkylen-OH, -NH-C₅-C₁₈-Alkylen-NH₂, 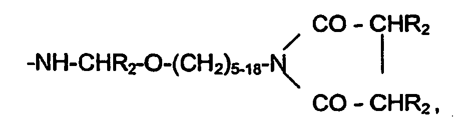 -NH-CHR₂-O-C₅-C₁₈-Alkylen-NH₂,
R₂ = H, C₁-C₇ - Alkyl;
R₃ = C₁-C₁₈ - Alkyl, H;
R₄ = C₂C₁₈-Alkylen, -[CH₂CH₂-O-CH₂CH₂]ₙ-, -[CH₂-CH(CH₃)-O-CH₂-CH(CH₃)]ₙ-, -[-O-CH₂-CH₂-CH₂-CH₂-]ₙ-, -[(CH₂)₂₋₈-O-CO-_{C6-C12}-Aryl-CO-O-(CH₂)₂₋₈-]ₙ-, -[(CH₂)₂₋₈-O-CO-_{C6-C12-}Alkylen-CO-O-(CH₂)₂₋₈-]ₙ -,
wobei n = 1 bis 200,
Siloxangruppen enthaltende Sequenzen des Typs C₁-C₄-Alkyl C₁-C₄-Alkyl, -(C₁-C₁₈)-Alkyl - O - Si-O-[Si-]₁₋₄- O -(C₁-C₁₈)-Alkyl -, C₁-C₄-Alkyl, C₁-C₄-Alkyl
Siloxangruppen enthaltende Polyestersequenzen des Typs -[(A)ᵣ-O-CO-(B)ₛ-CO-O-(A)ᵣ]- , bei denen
A = {(CH₂)₂₋₈-O-CO-(C₆-C₁₄)-Arylen-CO-O-(CH₂)₂₋₈-} oder -{(CH₂)₂₋₈-O-CO-(C₂-C₁₂)-Alkylen-CO-O-(CH₂)₂₋₈-}; C₁-C₄-Alkyl C₁-C₄-Alkyl
B = -{(C₆-C₁₄)-Arylen-CO-O-({Si -O-[Si-O]_{y}-CO-(C₆- C₁₄)-Arylen-} C₁-C₄-Alkyl C₁-C₄-Alkyl oder C₁-C₄-Alkyl C₁-C₄-Alkyl {O-CO-(C₂-C₁₂)-Alkylen-CO-O-({Si-O-[Si-O]_{z}-CO-(C₂-C₁₂)-Alkylen-CO-}; C₁-C₄-Alkyl C₁-C₄-Alkyl r = 1 bis 70; s = 1 bis 70 und y = 3 bis 50 bedeuten;
Siloxangruppen enthaltende Polyethersequenzen des Typs C₁-C₄-Alkyl C₁-C₄-Alkyl -CH₂-CHR₂-O-({Si-O-[Si-O]_{y}CHR₂-CH₂-C₁-C₄-Alkyl C₁-C₄-Alkyl
wobei R₂ = H; C₁-C₄-Alkyl und y = 3 bis 50 bedeuten;
Sequenzen auf Basis von Alkylenoxidaddukten des Melamins vom Typ 2-Amino-4,6-di-_{C2-C4-}alkylenamino-1,3,5-triazin - Sequenzen
Phenolethersequenzen auf Basis zweiwertiger Phenole und C₂-C₈-Diolen vom Typ -C₂-C₈-Alkylen-O-(C₆-C₁₈)-Arylen-O-(C₂-C₈)-Alkylen-Sequenzen bilden,
in den Oligotriazinethem das Molverhältnis der Substituenten R₃ : R₄ = 20 : 1 bis 1 : 20 beträgt,
der Anteil der Verknüpfungen der Triazinsegmente durch Brückenglieder - NH-CHR₃-O-R₄-O-CHR₃-NH- 5 bis 95 Mol% beträgt,
enthalten.

13. Verfahren nach Anspruch 11 oder 12, **dadurch gekennzeichnet, dass** die mit Alkoholen verätherten Melamin-Formaldehyd-Harze weitere die Reaktivität der Präpolymeren und die molekulare Struktur der ausgehärteten Polymeren beeinflussende Verbindungen enthalten.

14. Verfahren nach mindestens einem der vorher genannten Ansprüche, **dadurch gekennzeichnet, dass** die reaktiven dreidimensional vernetzbaren, nichtlinearen Präpolymeren bis zu 20 Masse% weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane enthalten.

15. Verfahren nach mindestens einem der vorher genannten Ansprüche, **dadurch gekennzeichnet, dass** die reaktiven dreidimensional vernetzbaren, nichtlinearen Präpolymeren bis zu 20 Masse-% aliphatische Diole vom Typ HO-R-OH sowie bis zu 2 Masse-% Füllstoffe, Farbpigmente, Stabilisatoren, UV-Absorber und/oder Hilfsstoffe enthalten.

16. Verfahren nach mindestens einem der vorher genannten Ansprüche **dadurch gekennzeichnet, dass** die reaktiven dreidimensional vernetzbaren, nichtlinearen Präpolymeren vor ihrer Verarbeitung in Form von zylindrischen, linsenförmigen, pastillenförmigen oder kugelförmigen Partikeln mit einem mittleren Durchmesser von 0,5 bis 8 mm vorliegen.

17. Verfahren nach mindestens einem der vorher genannten Ansprüche, **dadurch gekennzeichnet, dass** die reaktiven, dreidimensional vernetzbaren, nichtlinearen Präpolymeren für ihre Verspinnung bei etwa 70 °C bis 130°C geschmolzen werden.

18. Verfahren nach mindestens einem der vorher genannten Ansprüche, **dadurch gekennzeichnet, dass** die Düsen einen Durchmesser von 0,1 bis 3 mm aufweisen.

19. Verfahren nach Anspruch 18, **dadurch gekennzeichnet, dass** die Düsen einen Durchmesser von 0,5 bis 1 mm aufweisen.

20. Verfahren nach mindestens einem der vorher genannten Ansprüche, **dadurch gekennzeichnet, dass** sich die Düsen auf und / oder in den Spitzen von Kegeln befinden und die heiße Luft mit hoher Geschwindigkeit an den Düsenkegeln entlang strömt.

21. Verfahren nach Anspruch 20, **dadurch gekennzeichnet, dass** die Kegel einen Winkel von 10 bis 90° aufweisen.

22. Verfahren nach mindestens einem der vorher genannten Ansprüche, **dadurch gekennzeichnet, dass** die heiße Luft, insbesondere die an den Spitzen der Düsenkegel mit hoher Geschwindigkeit entlang strömende heiße Luft eine Temperatur von 150°C bis 400°C aufweist.

23. Verfahren nach Anspruch 22, **dadurch gekennzeichnet, dass** die heiße Luft, insbesondere die an den Spitzen der Düsenkegel mit hoher Geschwindigkeit entlang strömende heiße Luft eine Temperatur von 180 bis 300°C aufweist.

24. Verfahren nach mindestens einem der vorher genannten Ansprüche, **dadurch gekennzeichnet, dass** die entstandenen Fasern, insbesondere Feinstfasern Filamente sind oder ein Durchmesser/Längenverhältnis von größer 1 zu 50 aufweisen.

25. Verfahren nach mindestens einem der vorher genannten Ansprüche, **dadurch gekennzeichnet, dass** die Feinstfasern einen mittleren Durchmesser von 0,5 bis 1.00 µm aufweisen.

26. Verfahren nach Anspruch 25, **dadurch gekennzeichnet, dass** die Feinstfasern einen mittleren Durchmesser von 1 bis 7 µm besitzen.

27. verfahren nach mindestens einem der vorher genannten Ansprüche, **dadurch gekennzeichnet, dass** die Fasern eine ungeordnete, kleinteilige Kräuselstruktur aufweisen.

28. Verfahren nach mindestens einem der vorher genannten Ansprüche, **dadurch gekennzeichnet, dass** die Trennung der Feihstfasern vom Luftstrom mit einem in den Luft-/Feinstfaserstrom eingeschobenen Drahtgitter oder Drahtgeflecht erfolgt und sich dabei gleichzeitig ein unverfestigtes Vlies ausbildet.

29. Verfahren nach Anspruch 28, **dadurch gekennzeichnet, dass** das Drahtgitter oder Drahtgeflecht als endloses Band vorliegt.

30. Verfahren nach Anspruch 28 oder 29, **dadurch gekennzeichnet, dass** die Luft des Luft-/Feinstfaser-stroms unterhalb des Drahtgitters oder /Drahtgeflechtes abgesaugt wird.

31. Verfahren nach mindestens einem der vorher genannten Ansprüche, zu **dadurch gekehnzeichnet, dass** die Verdichtung bis auf die gewünschte Vliesdichte durch mechanischen Druck oder durch Formgebung erfolgt.

32. Verfahren nach mindestens einem der vorher genannten Anspruche, **dadurch gekennzeichnet, dass** eine dreidimensionale Vernetzung bei Temperaturen unterhalb des Feinstfaserschmelzpunktes ausgelöst wird oder beginnt.

33. Verfahren nach mindestens einem der vorher genannten Ansprüche, **dadurch gekennzeichnet, dass** die die dreidimensionale Vernetzung auslösende, insbesondere die Kondensationsreaktion katalysierende komponente gasförmiges HCl und/oder gasförmiges HBr und/oder Ameisensäure unverdünnt oder verdünnt mit Luft oder einem anderen inerten Gas ist.

34. Verfahren nach mindestens einem der vorher genannten Ansprüche, **dadurch gekennzeichnet, dass** die Selbstverklebung der Feinstfasern, in denen die katalysierenden Komponenten entsprechend Anspruch 32 sorbiert sind, im Temperaturbereich zwischen 100 und 120°C erfolgt.

35. Verfahren nach mindestens einem der vorhergehenden Ansprüche, **dadurch gekennzeichnet, dass** die thermische Nachbehandlung des Vlieses durch stufenweises oder kontinuierliches Erwärmen mit heißer Luft erfolgt, wobei gleichzeitig das frei werdende Methanol zusammen mit abgespaltenen HCl und/oder HBr ausgetragen wird.

36. Verfahren nach Anspruch 35, **dadurch gekennzeichnet, dass** die thermische Nachbehandlung des Vlieses im Temperaturbereich von 200°C bis 320°C, vorzugsweise im Temperaturbereich von 250°C bis 280°C erfolgt und die Nachbehandlungszeit zwischen 15 min und 120 min, vorzugsweise zwischen 20 min und 60 min liegt.

37. Verfahren nach Anspruch 36, **dadurch gekennzeichnet, dass** das Vlies nach der Nachbehandlung mit Wasser gewaschen wird.

## Claims

1. A process for producing thermoset microfibrous webs, **characterized in that**
a) melts of reactive, three-dimensionally crosslinkable, nonlinear prepolymers are pressed through dies,
b) the exiting melts are attenuated by hot air to form microfibers,
c) the microfibers are separated from the air stream and are deposited to form a web consisting of a microfibrous braid,
d) the web is subsequently compacted,
e) treated with a medium inducing a three-dimensional crosslinking and in a subsequent thermal postcure the microfibers in the web are self-bonded and/or cured off.

2. The process according to claim 1, **characterized in that** reactive, nonlinear prepolymers three-dimensionally crosslinkable by a condensation reaction are pressed through dies situated in the tip of cones.

3. The process according to claim 2, **characterized in that** the exiting melt is attenuated directly at the die outlet to form microfibers by the hot air, whose temperature is above the starting temperature of the condensation reaction, flowing at a high rate of speed along the tips of the die cones.

4. The process according to claim 2 or 3, **characterized in that** the microfibers are separated from the air stream and are deposited as an unconsolidated web (random-laid ply).

5. The process according to claim 4, **characterized in that** the unconsolidated web is subsequently compacted.

6. The process according to at least one of claims 4 and 5, **characterized in that** the unconsolidated web has air comprising a component catalyzing the crosslinking flowing through it at temperatures below the melting point of the prepolymer.

7. The process according to at least one of claims 4 to 6, **characterized in that** the unconsolidated web subsequently has an inert medium flow through it and, in the process, the catalyzing component is completely removed from the spaces between the fibers or if appropriate neutralized with a basic gas.

8. The process according to at least one of claims 4 to 7, **characterized in that** the unconsolidated web is self-bonded and/or cured off to a consolidated web by elevating the temperature.

9. The process according to claim 8, **characterized in that** the web has hot air flow through it and, in the process, is incrementally or continuously further heated.

10. The process according to claim 8 or 9, **characterized in that** the web is dwelled at high temperatures.

11. The process according to at least one of the preceding claims, **characterized in that** the reactive crosslinkable, nonlinear prepolymers consist of alcohol-etherified melamine-formaldehyde resins.

12. The process according to claim 11, **characterized in that** the alcohol-etherified melamine-formaldehyde resins consist of meltable 4- to 18-nucleus oligotriazine ethers in which the triazine segments contain 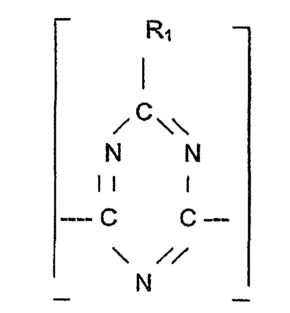
R₁ = -NH₂, -NH-CHR₂-O-R₃, -NH-CHR₂-O-R₄-OH, -CH₃, -C₃H₇, -C₆H₅, -OH, phthalimido-, succinimido-, -NH-CO-_{C5-C18}-alkyl, -NH-C₅-C₁₈-alkylene-OH 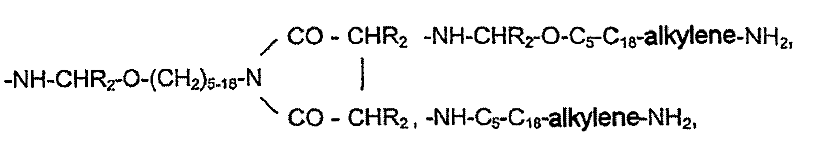 -NH-CHR₂-O-R₄-O-CHR₂-NH-, -NH-CHR₂-NH-, -NH-CHR₂-O-C₅-C₁₈-alkylene-NH-, -NH-C₅-C₁₈-alkylene-NH-, -NH-CHR₂-O-CHR₂-NH-,
R₂ = H, C₁-C₇-alkyl;
R₃ = C₁-C₁₈-alkyl, H;
R₄ = C₂-C₁₈-alkylene, -[CH₂-CH₂-O-CH₂-CH₂]ₙ-, - [CH₂-CH(CH₃)-O-CH₂-CH(CH₃)]ₙ-, -[-O-CH₂-CH₂-CH₂-CH₂-]ₙ-, -[(CH₂)₂₋₈-O-CO-_{C6-C12}-aryl-CO-O-(CH₂)₂₋₈-]ₙ-, -[(CH₂)₂₋₈-O-CO-_{C6-C12}-alkylene-CO-O-(CH₂)₂₋₈-]ₙ-,
where n = 1 to 200;
sequences containing siloxane groups, of the type C₁-C₄-alkyl C₁-C₄-alkyl, -(C₁-C₁₈)-alkyl-O-Si-O-[Si-]₁₋₄-O-(C₁-C₁₈)-alkyl-, C₁-C₄-alkyl, C₁-C₄-alkyl - polyester sequences containing siloxane groups, of the type -[(A)ᵣ-O-CO-(B)ₛ-CO-O-(A)ᵣ]-, in which
A = {(CH₂)₂₋₈-O-CO-(C₆-C₁₄)-arylene-CO-O-(CH₂)₂₋₈-} or
-{(CH₂)₂₋₈-O-CO-(C₂-C₁₂)-alkylene-CO-O-(CH₂)₂₋₈-}; C₁-C₄-alkyl C₁-C₄-alkyl
B = -{(C₆-C₁₄)-arylene-CO-O-({Si-O-[Si-O]_{y}-CO-(C₆-C₁₄)-arylene-} C₁-C₄-alkyl C₁-C₄-alkyl or C₁-C₄-alkyl C₁-C₄-alkyl {O-CO-(C₂-C₁₂)-alkylene-CO-O-({Si-O-[Si-O]_{Z}-CO-(C₂-C₁₂)-alkylene-CO-}; C₁-C₄-alkyl C₁-C₄-alkyl r = 1 to 70; s = 1 to 70 and y = 3 to 50;
polyether sequences containing siloxane groups, of the type C₁-C₄-alkyl C₁-C₄-alkyl -CH₂-CHR₂-O-({Si-O-[Si-O]_{y}-CHR₂-CH₂-C₁-C₄-alkyl C₁-C₄-alkyl
where R₂ = H; C₁-C₄-alkyl and y = 3 to 50;
sequences based on alkylene oxide adducts of melamine, of the type of 2-amino-4,6-di-_{C2-C4}-alkyleneamino-1,3,5-triazine sequences;
phenol ether sequences based on dihydric phenols and C₂-C₈ diols, of the type of -C₂-C₈-alkylene-O-(C₆-C₁₈)-arylene-O-(C₂-C₈)-alkylene- sequences; are linked by bridge members -NH-CHR₂-O-R₄-O-CHR₂-NH- and -NH-CHR₂-NH- and also, where appropriate, -NH-CHR₂-O-CHR₂-NH-, -NH-CHR₂-O-C₅-C₁₈-alkylene-NH- and/or -NH-C₅-C₁₈-alkylene-NH- to form 4- to 18-nucleus oligotriazine ethers of linear and/or branched structure, the terminal triazine segments in the oligotriazine ethers forming triazine segments of the structure 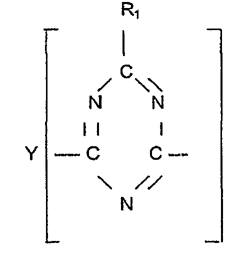
Y = -NH-CHR₂-O-R₃, -NH-CHR₂-O-R₄-OH and also if appropriate -NH-CHR₂-O-C₅-C₁₈-alkylene-NH₂, -NH-C₅-C₁₈-alkylene-NH₂, -NH-C₅-C₁₈-alkylene-OH,
R₁ = -NH₂, -NH-CHR₂-O-R₃, -NH-CHR₂-O-R₄-OH, -CH₃, -C₃H₇, -C₆H₅, -OH, phthalimido-, succinimido-, -NH-CO-R₃, -NH-C₅-C₁₈-alkylene-OH, -NH-C₅-C₁₈-alklene-NH₂, 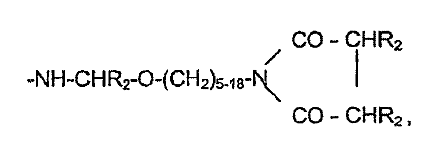 -NH-CHR₂-O-C₅-C₁₈-alkylene-NH₂,
R₂ = H, C₁-C₇-alkyl;
R₃ = C₁-C₁₈-alkyl, H;
R₄ = C₂-C₁₈-alkylene, -[CH₂-CH₂-O-CH₂-CH₂]ₙ-, -[CH₂-CH(CH₃)-O-CH₂-CH(CH₃)]ₙ-, -[-O-CH₂-CH₂-CH₂-CH₂-]ₙ-, -[(CH₂)₂₋₈-O-CO-_{C6-C12}-aryl-CO-O-(CH₂)₂₋₈-]ₙ-, -[(CH₂)₂₋₈-O-CO-_{C6-C12}-alkylene-CO-O-(CH₂)₂₋₈-]ₙ-,
where n = 1 to 200;
sequences containing siloxane groups, of the type C₁-C₄-alkyl C₁-C₄-alkyl, -(C₁-C₁₈)-alkyl-O-Si-O-[Si-]₁₋₄-O-(C₁-C₁₈)-alkyl-, C₁-C₄-alkyl, C₁-C₄-alkyl polyester sequences containing siloxane groups, of the type -[(A)ᵣ-O-CO-(B)ₛ-CO-O-(A)ᵣ]-, in which
A = {(CH₂)₂₋₈-O-CO-(C₆-C₁₄)-arylene-CO-O-(CH₂)₂₋₈-} or -{(CH₂)₂₋₈-O-CO-(C₂-C₁₂)-alkylene-CO-O-(CH₂)₂₋₈-}; C₁-C₄-alkyl C₁-C₄-alkyl
B = -{(C₆-C₁₄)-arylene-CO-O-({Si-O-[Si-O]_{y}-CO-(C₆-C₁₄)-arylene-} C₁-C₄-alkyl C₁-C₄-alkyl or C₁-C₄-alkyl C₁-C₄-alkyl {O-CO-(C₂-C₁₂)-alkylene-CO-O-({Si-O-[Si-O]_{Z}-CO-(C₂-C₁₂)-alkylene-CO-}; C₁-C₄-alkyl C₁-C₄-alkyl r = 1 to 70; s = 1 to 70 and y = 3 to 50;
polyether sequences containing siloxane groups, of the type C₁-C₄-alkyl C₁-C₄-alkyl -CH₂-CHR₂-O-({Si-O-[Si-O]_{y}-CHR₂-CH₂-C₁-C₄-alkyl C₁-C₄-alkyl
where R₂ = H; C₁-C₄-alkyl and y = 3 to 50;
sequences based on alkylene oxide adducts of melamine, of the type of 2-amino-4,6-di-_{C2-C4}-alkyleneamino-1,3,5-triazine sequences;
phenol ether sequences based on dihydric phenols and C₂-C₈ diols, of the type of -C₂-C₈-alkylene-O-(C₆-C₁₈)-arylene-O-(C₂-C₈)-alkylene- sequences;
in the oligotriazine ethers the molar ratio of the substituents R₃:R₄ = 20:1 to 1:20,
the proportion of the linkages of the triazine segments through bridge members -NH-CHR₃-O-R₄-O-CHR₃-NH- is 5 to 95 mol%.

13. The process according to claim 11 or 12, **characterized in that** the alcohol-etherified melamine-formaldehyde resins contain further compounds influencing the reactivity of the prepolymers and the molecular structure of the cured polymers.

14. The process according to at least one of the aforementioned claims, **characterized in that** the reactive three-dimensionally crosslinkable, nonlinear prepolymers contain up to 20% by mass of further reactive polymers selected from the group consisting of ethylene copolymers, maleic anhydride copolymers, modified maleic anhydride copolymers, poly(meth)acrylates, polyamides, polyesters and polyurethanes.

15. The process according to at least one of the aforementioned claims, **characterized in that** the reactive three-dimensionally crosslinkable, nonlinear prepolymers contain up to 20% by mass of aliphatic diols of the HO-R-OH type and also up to 2% by mass of fillers, color pigments, stabilizers, UV absorbers and/or auxiliaries.

16. The process according to at least one of the aforementioned claims, **characterized in that** the reactive three-dimensionally crosslinkable, nonlinear prepolymers are before processing in the form of cylindrical, lenticular, pastille-shaped or spherical particles having an average diameter of 0.5 to 8 mm.

17. The process according to at least one of the aforementioned claims, **characterized in that** the reactive, three-dimensionally crosslinkable, nonlinear prepolymers are melted at about 70°C to 130°C for spinning.

18. The process according to at least one of the aforementioned claims, **characterized in that** the dies have a diameter of 0.1 to 3 mm.

19. The process according to claim 18, **characterized in that** the dies have a diameter of 0.5 to 1 mm.

20. The process according to at least one of the aforementioned claims, **characterized in that** the dies are situated on and/or in the tips of cones and the hot air flows along the die cones at a high rate of speed.

21. The process according to claim 20, **characterized in that** the cones have an angle of 10 to 90°.

22. The process according to at least one of the aforementioned claims, **characterized in that** the hot air, in particular the hot air flowing along the tips of the die cones at a high rate of speed, has a temperature of 150°C to 400°C.

23. The process according to claim 22, **characterized in that** the hot air, in particular the hot air flowing along the tips of the die cones at a high rate of speed, has a temperature of 180°C to 300°C.

24. The process according to at least one of the aforementioned claims, **characterized in that** the resulting fibers, in particular microfibers, are filaments or have a diameter/length ratio of greater than 1:50.

25. The process according to at least one of the aforementioned claims, **characterized in that** the microfibers have an average diameter of 0.5 to 100 µm.

26. The process according to claim 25, **characterized in that** the microfibers have an average diameter of 1 to 7 µm.

27. The process according to at least one of the aforementioned claims, **characterized in that** the fibers have a disordered, small-scale crimped structure.

28. The process according to at least one of the aforementioned claims, **characterized in that** the microfibers are separated from the air stream using a wire grid or braid inserted into the air/microfiber stream and at the same time an unconsolidated web forms.

29. The process according to claim 28, **characterized in that** the wire grid or braid is in the form of an endless belt.

30. The process according to claim 28 or 29, **characterized in that** the air of the air/microfiber stream is aspirated away underneath the wire grid or braid.

31. The process according to at least one of the aforementioned claims, **characterized in that** the web is compacted to the desired density by mechanical pressure or by forming.

32. The process according to at least one of the aforementioned claims, **characterized in that** a three-dimensional crosslinking is induced or starts at temperatures below the microfiber melting point.

33. The process according to at least one of the aforementioned claims, **characterized in that** the component inducing the three-dimensional crosslinking, in particular the component catalyzing the condensation reaction, is gaseous HCl and/or gaseous HBr and/or formic acid neat or diluted with air or some other inert gas.

34. The process according to at least one of the aforementioned claims, **characterized in that** the microfibers in which the catalyzing components defined in claim 32 are sorbed self-bond in the temperature range between 100 and 120°C.

35. The process according to at least one of the preceding claims, **characterized in that** the thermal aftertreatment of the web is effected by incremental or continuous heating with hot air which at the same time, the methanol released is discharged together with detached HCl and/or HBr.

36. The process according to claim 35, **characterized in that** the thermal aftertreatment of the web is effected in the temperature range from 200°C to 320°C and preferably in the temperature range from 250°C to 280°C and the aftertreatment time is between 15 min and 120 min and preferably between 20 min and 60 min.

37. The process according to claim 36, **characterized in that** the web is washed with water after the aftertreatment.

## Revendications

1. Procédé de production de non-tissés thermodurcissables à fibres superfines,
**caractérisé en ce que**
a) on presse les masses fondues des prépolymères non linéaires, réactifs, réticulables de manière tridimensionnelle, dans des filières,
b) les masses fondues émergeantes sont soufflées en fibres superfines à l'aide d'air chaud,
c) les fibres superfines sont séparées du courant d'air et déposées en un non-tissé consistant en une natte des fibres superfines,
d) le non-tissé est ensuite comprimé,
e) traité avec un milieu déclenchant une réticulation tridimensionnelle et au cours d'un traitement thermique ultérieur, les fibres superfines sont encollées de manière interne et/ou durcies.

2. Procédé selon la revendication 1, **caractérisé en ce que**
les prépolymères non linéaires, réactifs, réticulables de manière tridimensionnelle par une réaction de condensation, sont pressés dans des filières, qui se trouvent dans la pointe des torpilles.

3. Procédé selon la revendication 2, **caractérisé en ce que** la masse fondue émergeante est soufflée directement à la sortie de la filière en fibres superfines, par l'air chaud arrivant à grande vitesse le long des pointes des torpilles de filière, dont la température se situe au-delà de la température de départ de la réaction de condensation.

4. Procédé selon la revendication 2 ou 3, **caractérisé en ce que** les fibres superfines sont séparées du courant d'air et déposées en un non-tissé non consolidé (couche emmêlée).

5. Procédé selon la revendication 4, **caractérisé en ce que** le non-tissé non consolidé est ensuite comprimé.

6. Procédé selon au moins l'une quelconque des revendications 4 ou 5, **caractérisé en ce que** le non-tissé non consolidé est traversé d'air, qui contient un composant catalysant la réticulation, à des températures inférieures au point de fusion du prépolymère.

7. Procédé selon au moins l'une quelconque des revendications 4 à 6, **caractérisé en ce que** le non-tissé non consolidé est ensuite traversé par un milieu inerte et ainsi, les composants catalysants sont totalement éliminés de l'espace entre les fibres, ou le cas échéant, neutralisés avec un gaz basique.

8. Procédé selon au moins l'une quelconque des revendications 4 à 7, **caractérisé en ce que** le non-tissé non consolidé est encollé de manière interne et/ou durci en un non-tissé consolidé par augmentation de la température.

9. Procédé selon la revendication 8, **caractérisé en ce que** le non-tissé est traversé d'air chaud et ainsi, encore chauffé graduellement ou en continu.

10. Procédé selon la revendication 8 ou 9, **caractérisé en ce que** le non-tissé séjourne à haute température.

11. Procédé selon au moins l'une quelconque des revendications précédentes, **caractérisé en ce que** le prépolymère non linéaire, réactif, réticulable consiste en des résines mélamine-formaldéhyde, étherifiées avec des alcools.

12. Procédé selon la revendication 11, **caractérisé en ce que** la résine mélamine-formaldéhyde éthérifiée avec des alcools consiste en des oligoéthers de triazine fusibles de 4 à 18 noyaux, où dans les oligoéthers de triazine, on trouve les segments triazine : 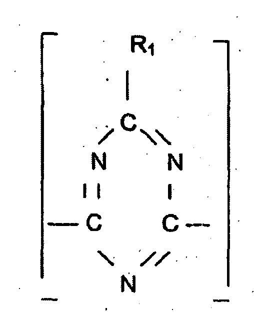
R₁ = -NH₂, -NH-CHR₂-O-R₃, -NH-CHR₂-O-R₄-OH, -CH₃, -C₃H₇, -C₆H₅, -OH, phtalimido, succinimido, -NH-CO-(alkyl en C₅-C₁₈), -NH-(alkylène en C₅-C₁₈)-OH, 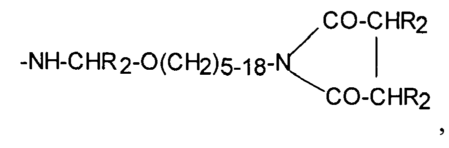 -NH-CHR₂-O-(alkylène en C₅-C₁₈)-NH₂, -NH-(alkylène en C₅-C₁₈)-NH₂, -NH-CHR₂-O-R₄-O-CHR₂-NH-, -NH-CHR₂-NH-, -NH-CHR₂-O-(alkylène en C₅-C₁₈)-NH-,-NH-(alkylène en C₅-C₁₈)-NH-, -NH-CHR₂-O-CHR₂-NH- ;
R₂ = H, alkyle en C₁-C₇;
R₃ = alkyle en C₁-C₁₈, H ;
R₄ = alkylène en C₂-C₁₈, -[CH₂-CH₂-O-CH₂-CH₂]ₙ-, -[CH₂-CH(CH₃)-O-CH₂-CH(CH₃)]ₙ-, -[O-CH₂-CH₂-CH₂-CH₂]ₙ-, -[(CH₂)₂₋₈-O-CO-(aryl en C₆-C₁₂)-CO-O-(CH₂)₂₋₈]ₙ-, -[(CH₂)₂₋₈-O-CO-(alkylène en C₆-C₁₂)-CO-O-(CH₂)₂₋₈]ₙ-, où n = 1 à 200,
des séquences contenant des radicaux siloxane, du type : -(alkyl en C₁₋₁₈)-O-Si(alkyl en C₁₋₄)₂-O-[Si(alkyl en C₁₋₄)₂]₁₋₄-O-(alkyl en C₁₋₁₈)-, des séquences polyester contenant des radicaux siloxane, du type : -[(A)ᵣ-O-CO-(B)ₛ-CO-O-(A)ᵣ]-, où
A = -{(CH₂)₂₋₈-O-CO-(arylène en C₆-C₁₄)-CO-O-(CH₂)₂₋₈}- ou -{(CH₂)₂₋₈-O-CO-(alkylène en C₂-C₁₂)-CO-O-(CH₂)₂₋₈}- ;
B = -{(arylène en C₆-C₁₄)-CO-O-({Si(alkyl en C₁₋₄)₂-O-[Si(alkyl en C₁₋₄)₂-O]_{y}-CO-(arylène en C₆-C₁₄)} ou {O-CO-(alkylène en C₂-C₁₂)-CO-O-({Si(alkyl en C₁₋₄)₂-O-[Si(alkyl en C₁₋₄)₂-O]_{z}-CO-(alkylène en C₂-C₁₂)-CO} ;
r = 1 à 70 ; s = 1 à 70 et y = 3 à 50 ;
des séquences polyéther contenant des radicaux siloxane, du type : -CH₂-CHR₂-O-({Si(alkyl en C₁₋₄)₂-O-[Si(alkyl en C₁₋₄)₂-Oly-CHR₂-CH₂- où R₂ = H, alkyle en C₁-C₄ et y = 3 à 50 ;
des séquences à base d'adduits d'oxyde d'alkylène de la mélamine du type : 2-amino-4,6-di(alkylène en C₂-C₄)amino)-1,3,5-triazine ;
des séquences phénoléther à base de phénols bivalents et de diols en C₂-C₈, du type : -(alkylène en C₂-C₈)-O-(arylène en C₆-C₁₈)-O-(alkylène en C₂-C₈)-,
reliées par des éléments de pontage NH-CHR₂-O-R₄-O-CHR₂-NH- et NH-CHR₂-NH-, ainsi que le cas échéant NH-CHR₂-O-CHR₂-NH-, -NH-CHR₂-O-(alkylène en C₅-C₁₈)-NH- et respectivement NH-(alkylène en C₅-C₁₈)-NH- en oligoéthers de triazine ayant 4 à 18 noyaux avec structure linéaire et/ou ramifiée,
où les segments triazine terminaux dans l'oligoéther de triazine forment des segments de triazine de structure : 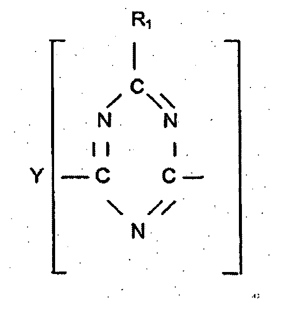
Y = -NH-CHR₂-O-R₃, -NH-CHR₂-O-R₄-OH, ainsi que le cas échéant -NH-CHR₂-O-(alkylène en C₅-C₁₈)-NH₂, -NH-(alkylène en C₅-C₁₈)-NH₂, -NH-(alkylène en C₅-C₁₈)-OH,
R₁ = -NH₂, -NH-CHR₂-O-R₃, -NH-CHR₂-O-R₄-OH, -CH₃, -C₃H₇, -C₆H₅, -OH, phtalimido, succinimido, -NH-CO-R₃, -NH-(alkylène en C₅-C₁₈)-OH, -NH-(alkylène en C₅-C₁₈)-NH₂, 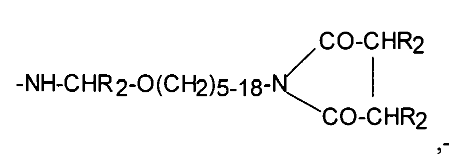 -NH-CHR₂-O-(alkylène en C₅-C₁₈)-NH₂,
R₂ = H, alkyle en C₁-C₇;
R₃ = alkyle en C₁-C₁₈, H ;
R₄ = alkylène en C₂-C₁₈, -[CH₂-CH₂-O-CH₂-CH₂]ₙ-, -[CH₂-CH(CH₃)-O-CH₂-CH(CH₃)]ₙ-, -[O-CH₂-CH₂-CH₂-CH₂]ₙ-, -[(CH₂)₂₋₈-O-CO-(aryl en C₆-C₁₂)-CO-O-(CH₂)₂₋₈]ₙ-, -[(CH₂)₂₋₈-O-CO-(alkylène en C₆-C₁₂)-CO-O-(CH₂)₂₋₈]ₙ-,
où n = 1 à 200,
des séquences contenant des radicaux siloxane, du type : -(alkyl en C₁₋₁₈)-O-Si(alkyl en C₁₋₄)₂-O-[Si(alkyl en C₁₋₄)₂]₁₋₄-O-(alkyl en C₁₋₈)-, des séquences polyester contenant des radicaux siloxane, du type : -[(A)ᵣ-O-CO-(B)ₛ-CO-O-(A)ᵣ]-, où
A = -{(CH₂)₂₋₈-O-CO-(arylène en C₆-C₁₄)-CO-O-(CH₂)₂₋₈}- ou -{(CH₂)₂₋₈-O-CO-(alkylène en C₂-C₁₂)-CO-O-(CH₂)₂₋₈}- ;
B = -{(arylène en C₆-C₁₄)-CO-O-({Si(alkyl en C₁₋₄)₂-O-[Si(alkyl en C₁₋₄)₂-O]_{y}-CO-(arylène en C₆-C₁₄)} ou {O-CO-(alkylène en C₂-C₁₂)-CO-O-({Si(alkyl en C₁₋₄)₂-O-[Si(alkyl en C₁₋₄)₂-O]_{z}-CO-(alkylène en C₂-C₁₂)-CO} ;
r = 1 à 70 ; s = 1 à 70 et y = 3 à 50 ;
des séquences polyéther contenant des radicaux siloxane, du type : -CH₂-CHR₂-O-({Si(alkyl en C₁₋₄)₂-O-[Si(alkyl en C₁₋₄)₂-O]_{y}-CHR₂-CH₂- où R₂ = H, alkyle en C₁-C₄ et y = 3 à 50 ;
des séquences à base d'adduits d'oxyde d'alkylène de la mélamine du type : 2-amino-4,6-di(alkylène en C₂-C₄)amino)-1,3,5-triazine ;
des séquences phénoléther à base de phénols bivalents et de diols en C₂-C₈, du type : -(alkylène en C₂-C₈)-O-(arylène en C₆-C₁₈)-O-(alkylène en C₂-C₈)-,
dans les oligoéthers de triazine, le rapport molaire des substituants se situe à R₃ : R₄ = 20 :1 à 1 :20,
la proportion des liaisons des segments triazine par les éléments de pontage -NH-CHR₃-O-R₄-O-CHR₃-NH- se situe dans l'intervalle allant de 5 à 95 % en moles.

13. Procédé selon la revendication 11 ou 12, **caractérisé en ce que** les résines mélamine-formaldéhyde éthérifiées avec des alcools contiennent d'autres composés influençant la réactivité du prépolymère et la structure moléculaire du polymère durci.

14. Procédé selon au moins l'une quelconque des revendications précédentes, **caractérisé en ce que** les prépolymères non linéaires, réactifs, réticulables de manière tridimensionnelle contiennent jusqu'à 20 % en masse d'autres polymères réactifs du type des copolymères d'éthylène, des copolymères d'anhydride maléique, des copolymères d'anhydride maléique modifiés, des poly(méth)acrylates, des polyamides, des polyesters et/ou des polyuréthannes.

15. Procédé selon au moins l'une quelconque des revendications précédentes, **caractérisé en ce que** les prépolymères non linéaires, réactifs, réticulables de manière tridimensionnelle contiennent jusqu'à 20 % en masse de diols aliphatiques de type HO-R-OH ainsi que jusqu'à 2 % en masse de charges, de pigments, de stabilisants, d'agents absorbant les U.V. et/ou d'auxiliaires.

16. Procédé selon au moins l'une quelconque des revendications précédentes, **caractérisé en ce que** les prépolymères non linéaires, réactifs, réticulables de manière tridimensionnelle avant de leur traitement sont disponibles sous forme des particules en forme cylindrique, lenticulaire, des pastilles ou sphérique avec un diamètre moyen allant de 0,5 à 8 mm.

17. Procédé selon au moins l'une quelconque des revendications précédentes, **caractérisé en ce que** les prépolymères non linéaires, réactifs, réticulables de manière tridimensionnelle sont fondus pour leur filage d'environ 70°C à 130°C.

18. Procédé selon au moins l'une quelconque des revendications précédentes, **caractérisé en ce que** les filières présentent un diamètre allant de 0,1 à 3 mm.

19. Procédé selon la revendication 18, **caractérisé en ce que** les filières présentent un diamètre allant de 0,5 à 1 mm.

20. Procédé selon au moins l'une quelconque des revendications précédentes, **caractérisé en ce que** les filières se trouvent sur et/ou dans les pointes des torpilles et l'air chaud s'écoule à grande vitesse le long des torpilles de filière.

21. Procédé selon la revendication 20, **caractérisé en ce que** les torpilles présentent un angle allant de 10 à 90°.

22. Procédé selon au moins l'une quelconque des revendications précédentes, **caractérisé en ce que** l'air chaud, en particulier l'air chaud s'écoulant à haute vitesse le long des pointes des torpilles de filière, présente une température allant de 150°C à 400°C.

23. Procédé selon la revendication 22, **caractérisé en ce que** l'air chaud, en particulier l'air chaud s'écoulant à haute vitesse le long des pointes des torpilles de filière, présente une température allant de 180°C à 300°C.

24. Procédé selon au moins l'une quelconque des revendications précédentes, **caractérisé en ce que** les fibres formées, en particulier les fibres superfines, sont des filaments ou présentent un rapport diamètre/longueur de plus de 1 à 50.

25. Procédé selon au moins l'une quelconque des revendications précédentes, **caractérisé en ce que** les fibres superfines présentent un diamètre moyen allant de 0,5 à 100 µm.

26. Procédé selon la revendication 25, **caractérisé en ce que** les fibres superfines présentent un diamètre moyen allant de 1 à 7 µm.

27. Procédé selon au moins l'une quelconque des revendications précédentes, **caractérisé en ce que** les fibres présentent une structure plissée fine, désordonnée.

28. Procédé selon au moins l'une quelconque des revendications précédentes, **caractérisé en ce que** la séparation des fibres superfines du courant d'air est réalisée avec une grille ou grillage en fil métallique inséré dans le courant air-fibres superfines et il se forme simultanément, un non-tissé non consolidé.

29. Procédé selon la revendication 28, **caractérisé en ce que** la grille ou grillage en fil métallique se présente sous forme d'une bande sans fin.

30. Procédé selon la revendication 28 ou 29, **caractérisé en ce que** l'air du courant air-fibres superfines est aspiré sous la grille ou grillage en fil métallique.

31. Procédé selon au moins l'une quelconque des revendications précédentes, **caractérisé en ce que** la compression est réalisée jusqu'à la densité souhaitée du non-tissé par pression mécanique ou par façonnage.

32. Procédé selon au moins l'une quelconque des revendications précédentes, **caractérisé en ce qu'**une réticulation tridimensionnelle est déclenchée ou commence à une température inférieure au point de fusion des fibres superfines.

33. Procédé selon au moins l'une quelconque des revendications précédentes, **caractérisé en ce que** le composant déclenchant la réticulation tridimensionnelle, en particulier catalysant la réaction de condensation, est HCl gazeux et/ou HBr gazeux et/ou l'acide formique, non dilués ou dilués avec de l'air ou un autre gaz inerte.

34. Procédé selon au moins l'une quelconque des revendications précédentes, **caractérisé en ce que** l'auto-encollement des fibres superfines, au cours duquel les composants catalysants de la revendication 33 sont absorbés, est réalisé à une température située dans un intervalle allant de 100 à 120°C.

35. Procédé selon au moins l'une quelconque des revendications précédentes, **caractérisé en ce que** le traitement thermique ultérieur du non-tissé est réalisé par chauffage graduel ou continu avec de l'air chaud, concurremment le méthanol libérant étant coulé ensemble avec de HCl et/ou de HBr separé.

36. Procédé selon la revendication 35, **caractérisé en ce que** le traitement thermique ultérieur du non-tissé est réalisé à une température située dans l'intervalle allant de 200°C à 320°C, de préférence 250°C à 280°C et la durée du traitement ultérieur se situe dans l'intervalle allant de 15 minutes à 120 minutes, de préférence de 20 minutes à 60 minutes.

37. Procédé selon la revendication 36, **caractérisé en ce que** le non-tissé est lavé avec de l'eau après le traitement ultérieur.
